## Europäisches Patentamt

## European Patent Office

## Office européen des brevets

(11) Numéro de publication: **0 069 663**

**B1**

(12) **FASCICULE DE BREVET EUROPEEN**

(45) Date de publication du fascicule du brevet: **01.04.87**

(51) Int. Cl.⁴: **B 01 D 3/00**, B 01 D 5/00, C 23 G 5/04

(21) Numéro de dépôt: **82401245.4**

(22) Date de dépôt: **02.07.82**

(54) **Dispositif de nettoyage et procédé de récupération de liquide de nettoyage.**

(30) Priorité: 03.07.81 FR 8113180
22.02.82 FR 8202887
03.03.82 FR 8203530

(43) Date de publication de la demande:
**12.01.83 Bulletin 83/02**

(45) Mention de la délivrance du brevet:
**01.04.87 Bulletin 87/14**

(84) Etats contractants désignés:
**AT BE CH DE GB IT LI NL SE**

(56) Documents cités:
**BE-A- 343 184
BE-A- 381 363
DE-A-2 143 347
DE-A-2 259 740
DE-A-2 934 440
DE-A-3 000 081
FR-A- 480 201
FR-A-1 373 729
NL-A-7 302 106
US-A-2 980 105
US-A-3 475 280
US-A-3 635 799
US-A-3 838 016
US-A-4 022 669**

(73) Titulaire: **Harquevaux, Pierre**
**36, rue des Pivoines**
**Alfortville (Val de Marne) (FR)**
(73) Titulaire: **Brunel, Alain**
**4, rue Carnot**
**Combes la Ville (Seine et Marne) (FR)**

(72) Inventeur: **Harquevaux, Pierre**
**36, rue des Pivoines**
**Alfortville (Val de Marne) (FR)**
Inventeur: **Brunel, Alain**
**4, rue Carnot**
**Combes la Ville (Seine et Marne) (FR)**

(74) Mandataire: **Cabinet BERT, DE KERAVENANT &**
**HERRBURGER**
**115, Boulevard Haussmann**
**F-75008 Paris (FR)**

Courier Press, Leamington Spa, England.

EP 0 069 663 B1

## Description

La présente invention concerne une installation de nettoyage à l'aide d'un solvant et de recyclage du solvant souillé ainsi que procédé de récupération de liquides de nettoyage et moyens pour la mise en oeuvre du procédé.

Une telle installation de nettoyage est en particulier utilisée pour le nettoyage d'articles ou d'outils de peintre tels que des pistolets, des pinceaux, etc.

Ce nettoyage se fait avec un solvant comme par exemple un solvant cellulosique.

Or, comme pour des raisons de pollution de l'environnement et de coût de solvant, il n'est pas envisageable de rejeter le solvant souillé, on a déjà réalisé des installations de traitement du solvant souillé, en distillant le solvant souillé pour obtenir du solvant propre, le résidu de distillation, constituant les déchets.

Dans une telle installation, qui se compose d'une cuve de distillation, le problème est celui du nettoyage de la cuve. En effet, comme il est nécessaire de chauffer la cuve pour évaporer le solvant, les parties non volatiles à la température d'ébullition du solvant s'accumulent au fond de la cuve sous forme de croute. Comme il n'est pas possible de nettoyer la cuve de distillation après chaque utilisation, on laisse s'accumuler une quantité relativement importante de boues qui forment progressivement une croute sur le fond de la cuve. Or, cette croute est particulièrement difficile à enlever. A cela s'ajoute que la conception des installations actuellement connues, et notamment les mesures de sécurité nécessaires du fait du très grand risque d'explosion, ainsi que les dispositions sanitaires du fait de la toxicité du solvant, ont abouti à la réalisation d'installations relativement complexes, lourdes, coûteuses ne permettant d'envisager qu'une utilisation à grande échelle. En d'autres termes les installations connues ne s'appliquent pas aux entreprises moyennes et en particulier les ateliers de peinture industrielle pour lesquels le problème du nettoyage de leurs outils et de la récupération du rejet du solvant utilisé pour le nettoyage reste posé.

La présente invention a pour but ce créer une installation de nettoyage et de recyclage de solvant souillé, ne posant pas les problèmes de nettoyage de la cuve de distillation, permettant de fonctionner de façon modulaire, à petite ou à grande échelle et permettant de recycler de façon très efficace un solvant, assurant un fonctionnement en sécurité et interdisant pratiquement toute fausse manoeuvre dangereuse pour le personnel ou entraînant des dégâts matériels, évitant les nettoyages fastidieux et dans des conditions d'hygiène dangereuses.

A cet effet, l'invention concerne une installation de nettoyage à l'aide d'un solvant avec recyclage du solvant souillé, installation comportant des dispositifs de nettoyage contenant du solvant et munis d'un bac de nettoyage et de décantation, et des moyens de transfert du liquide souillé vers un dispositif de recyclage par distillation et condensation du solvant et formation de boues, installation caractérisée en ce que le dispositif de recyclage par distillation et condensation (2) comporte une cuve de distillation (21) amovible et des moyens de chauffage (30, 31) du liquide souillé par immersion de la cuve contenant le liquide souillé dans un milieu fluide et en ce qu'une zone de condensation périphérique est délimitée à l'intérieur du bac par une pièce amovible (26) formant couvercle.

Suivant une autre caractéristique de l'invention, la zone de condensation est délimitée à sa base par une goulotte périphérique fixée à la paroi intérieure du dispositif de recyclage, cette goulotte servant en même temps de support à la cuve de distillation.

Aussi, grâce à l'invention, comme la cuve de distillation est amovible, il est très facile de la nettoyer ou de la remplacer lorsque celle-ci n'est plus nettoyable. De plus, lorsque la cuve est à jeter, elle constitue le réceptacle des résidus, qui sont ainsi d'une manutention relativement facile et propre.

Comme la zone de condensation périphérique débouche au-dessus d'une goulotte dont le bord extérieur est recouvert par le bord de la cuve de distillation, on évite que le solvant souillé ou le solvant condensé ne puisse arriver dans le liquide de chauffage contenu dans le fond de l'enceinte. En effet, l'ébullition quasi-instantanée du solvant provoque non seulement un bruit de claquement mais risquerait d'entraîner, si la quantité était importante, une explosion du dispositif de distillation.

Comme les tubes formant le serpentin de réfrigération se trouvent au voisinage de la paroi intérieure de l'enceinte, au niveau de la partie supérieure ces tubes ne gênent pas l'extraction de la cuve de distillation. Par ailleurs, pour réduire le volume dans lequel les vapeurs de solvant se condensent, il est prévu de réaliser le couvercle en deux parties, la partie couvercle proprement dite et la partie formant sous-couvercle, munie d'un volume de remplissage simplement destiné à occuper la partie centrale supérieure du dispositif de distillation et portant éventuellement le tube de remplissage et le plaque de protection contre les projections.

Suivant une autre caractéristique de l'invention, on a prévu un dispositif de refroidissement pour le condensat, pour obtenir du solvant régénéré, à température voisine de la température ambiante.

Suivant une autre caractéristique de l'invention, le moyen de transfert de liquide souillé du bac de nettoyage dans la cuve de distillation se fait à l'aide d'un tube en U, recourbé dans sa partie supérieure débouchant dans le dispositif de distillation pour former un siphon, dont la colonne montante est munie d'un dispositif d'injection d'air pour mettre en mouvement le liquide souillé en vue de son introduction dans la cuve de distillation. Cela évite tout contact des pièces rotatives d'une pompe habituelle avec le solvant souillé et réduit les risques d'encrassage, etc.. pendant les périodes d'attente.

Les dispositifs de nettoyage comportent des bacs de nettoyage séparés horizontalement en deux parties communicantes la partie inférieure étant de préférence remplie d'un liquide de décantation tel que de l'eau pour permettre la décantation des particules solubles ou non solubles dans le solvant. On économise ainsi le volume correspondant de solvant puisque cette partie inférieure est en général de l'eau. Seule la partie supérieure du bac de nettoyage et de décantation est remplie de solvant; comme la densité des solvants habituels est inférieure à celle de l'eau, le solvant surnage.

Pour éviter des intoxications ou des troubles respiratoires aux utilisateurs du bac de nettoyage, il est prévu un collecteur périphérique aspirant les vapeurs. Ce collecteur est mis en oeuvre dès que le couvercle du dispositif est enlevé.

Suivant d'autres caractéristiques, l'invention comporte divers moyens de sécurité tels que des détecteurs de liquide souillé dans la cuve de distillation, un détecteur d'eau dans le serpentin de condensation, un détecteur de fermeture du bac de nettoyage, un évent, etc...

Etant donné que l'installation décrit ci-dessus peut aussi être utilisée pour recycler des solvants ou plus généralement des liquides de nettoyage souillés, à un endroit différent du lieu d'utilisation des liquides de nettoyage, l'invention se propose également de créer des moyens permettant d'alimenter le dispositif de recyclage à l'aide de liquide à recycler et des moyens permettant d'éviter le dispositif de recyclage dans des récipients destinés à recevoir le produit recyclé.

A cet effet, l'invention concerne également une installation de nettoyage du type ci-dessus, caractérisée en ce qu'elle comporte un moyen d'alimentation du dispositif de recyclage à partir d'un récipient susceptible d'être fermé hermétiquement et qui contient un liquide à recycler, ce moyen d'alimentation étant composé d'une conduite d'injection de gaz comprimé dans le récipient et d'une conduite d'évacuation débouchant au niveau du fond du récipient pour permettre le refoulement du liquide à recycler dans le dispositif de recyclage, le début et la fin de l'opération d'alimentation étant commandés par un flotteur et un détecteur de niveau associés au dispositif de recyclage.

Ainsi, grâce à ce moyen d'alimentation il est possible de traiter et de recycler des liquides de nettoyage, de solvants souillés, etc.. provenant de postes de travail extérieurs, tels que par exemple des postes de peinture sur des chantiers, le traitement de liquide venant de petites unités extérieures, etc.. ne permettant pas ou ne justifiant pas le déplacement de l'ensemble de l'installation de nettoyage ou encore ne justifiant pas l'acquisition d'une telle installation. De plus, le mode d'évacuation par mise sous pression du récipient permet d'éviter des travaux d'infrastructure ou des équipements annexes puisque le niveau contenant le récipient à traiter peut être quelconque; dans le cas le plus simple, ce récipient se trouve placé sur le sol à côté du dispositif de recyclage.

En l'absence d'une telle installation, il serait nécessaire de prévoir un moyen de levage permettant de vider le récipient par gravité.

Suivant une autres caractéristique particulièrement avantageuse de l'invention, l'installation comporte également un moyen d'évacuation formé d'un récipient relié à la goulotte du dispositif de recyclage par l'intermédiaire d'un réservoir tampon, ce dernier étant lui-même relié à la goulotte par une conduite munie d'une vanne d'arrêt ainsi qu'à une source d'air comprimé par l'intermédiaire d'une conduite et d'une vanne d'arrêt, la fermeture alternée des vannes permettant respectivement l'écoulement du condensat de la goulotte dans ce récipient puis l'évacuation du liquide ainsi accumulé dans le réservoir tampon vers le récipient par envoi d'air comprimé.

Les avantages de ce moyen d'évacuation sont semblables à ceux du moyens d'alimentation puisque le récipient récepteur de liquide recyclé peut se trouver à une hauteur quelconque par rapport à la hauteur du dispositif de recyclage. Dans le cas le plus simple, ce récipient se trouve posé sur le sol. Dans le cas de l'évacuation, comme il n'est pas possible de mettre le dispositif de recyclage sous pression (du moins sans nécessiter du moyen relativement complexe et coûteux) il est avantageux de prévoir un réservoir tampon recevant le liquide par gravité puis d'évacuer ce réservoir tampon en utilisant un gaz comprimé, par exemple de l'air comprimé, vers le réservoir définitif recevant le liquide recyclé.

Suivant une autre caractéristique avantageuse l'installation comporte un moyen de mise à l'atmosphère extérieure du volume intérieur du récipient pour provoquer l'effondrement de la colonne de liquide dans la conduite et la canne et éviter qu'il ne s'établisse un siphon.

Suivant une autre caractéristique, le récipient est muni d'une soupape de sécurité.

Grâce à ces moyens de sécurité, on évite d'une part qu'il ne s'établisse à l'intérieur du récipient d'alimentation une pression excessive qui peut devenir dangereuse et provoquer si ce n'est une explosion du récipient, du moins une destruction partielle de celui-ci avec projection de liquide souillé, relativement volatil, etc..

De façon générale, les moyens de l'invention permettent d'utiliser l'installation générale non seulement comme poste principal à l'intérieur d'une chaîne de fabrication ou un atelier de fabrication comportant des postes de nettoyage à demeure, mais également traiter dans l'intervalle de non utilisation du dispositif de recyclage des liquides provenant de l'extérieur ou d'ateliers éloignés dont il n'est pas possible de relier les dispositifs de nettoyage au dispositif de recyclage.

Comme le dispositif de commande de l'installation permet un fonctionnement pratiquement automatique, il est possible suivant le degré d'utilisation des divers postes de nettoyage ou la quantité de fûts d'origine extérieure, à traiter, d'assurer commutation ou une alternance de traitement des différents récipients contenant du liquide souillé pour restituer le liquide recyclé soit à des postes d'utilisation, soit pour le mettre dans des récipients.

Bien que l'installation décrite ci-dessus soit en général efficace pour la récupération des liquides de nettoyage, des solvants, etc.., cette installation présente un certaine nombre d'inconvénients liés directement ou indirectement à la formation des boues de distillation.

En effet, la cuve est chauffée au bain-marie ou à la vapeur par l'intermédiaire de résistance électriques à cause des problèmes d'explosion. Les vapeurs qui se dégagent sont récupérées pour être condensées, le condensat étant le liquide propre ou liquide régénéré.

Les particules, les boues, etc.. s'accumulent au fond de la cuve. Après un ou plusieurs traitements suivant le dégré de souillure du liquide de départ et la quantité de liquide, il s'accumule une couche plus ou moins épaisse de boues au fond de la cuve et en partie sur les parois. Ces boues, à mesure qu'elles se dessèchent au cours des différents cycles de traitement successifs, durcissent et s'accrochent très fortement aux parois de la cuve. Or, cette épaisseur de boue ou cette croûte diminue considérablement la conductibilité thermique de la paroi, ce qui détériore l'efficacité du chauffage du liquide et, par conséquent, augmente la durée d'un cycle de traitement ainsi que le coût de l'opération. Il est donc nécessaire de façon relativement fréquente de nettoyer la cuve pour en enlever les boues et les croûtes. Or, cette opération de nettoyage est une opération pénible, longue, sailissante et coûteuse.

La présente invention a donc également pour but de créer un procédé et un moyen pour la mise en oeuvre du procédé permettant d'éviter le problème du nettoyage des cuves dans la distillation de liquides de nettoyage de solvants, etc.., en vue de leur récupération ou de leur régenération.

A cet effet, l'invention concerne un procédé récupération d'un liquide de nettoyage contenant des boues par une distillation et une condensation discontinues, ce procédé consistant à mettre la totalité ou une fraction du liquide à traiter dans une cuve de distillation, a chauffer pour distiller le liquide à récupérer et à condenser le liquide propre ou régénéré, les boues restant dans la cuve, de distillation procédé caractérisé en ce qu'on munit la cuve d'une garniture intérieure amovible et jetable épousant la forme intérieure de la cuve pour recevoir le liquide à traiter, cette garniture étant en un matériau chimiquement inerte par rapport aux composants du liquide à traiter et résistant au moins à une température égale à la température d'ébullition du liquide à récupérer.

Grâce à ce procédé, ou ne diminue pas l'échange de chaleur entre le moyen de chauffage et le liquide à distiller dans le cas d'une garniture neuve ou contenant peu de boues, ou de particules, etc..

Dès que la couche de boues atteint une certaine épaisseur, il suffit d'enlever la garniture et de la remplacer par une garniture propre. La garniture chargée des boues sert en même temps de conteneur pour le transport des boues vers une installation d'incinération, etc. Cela évite une nouvelle fois de souiller d'autres récipients qu'il faudrait, d'une façon ou d'une autre, nettoyer et, par suite, consommer du liquide de nettoyage du solvant, etc..

Suivant une autre caractéristique particulièrement intéressante de l'invention, la garniture est constituée par une poche souple, imperméable au liquide à traiter. Cette poche se fixe de façon amovible sur le bord de la cuve de distillation par exemple à l'aide d'un cavalier qui bloque le bord de la poche sur le bord de la cuve. Cette poche étant en un élément souple, par exemple, une matière synthétique, chimiquement inerte vis-à-vis du liquide à traiter et résistant au moins à la température d'ébullition du liquide à récupérer, elle est plaquée par le liquide à nettoyer contre la surface intérieure de la cuve; cela évite toute perte de conductibilité thermique par la formation d'une pellicule d'air ou de gaz entre la face intérieure de la cuve et la poche.

Il est particulièrement intéressant de fixer le bord supérieur de la poche à l'aide d'un cavalier formé d'un anneau muni de pattes radiales dirigées vers l'extérieur et ayant une forme de U. Ces pattes viennent s'accrocher sur le bord de la cuve et l'anneau s'applique à l'intérieur de la cuve. Le bord de la poche est ainsi bien bloqué contre le bord de la cuve en enveloppant ce bord suivant un angle d'enveloppement d'environ 180°, c'est-à-dire en étant rabattu par-dessus le bord, quelle que soit la forme de ce bord (bord plat, large ou étroit).

La présente invention sera décrite plus en détail à l'aide des dessins annexés, dans lesquels:

— la figure 1 représente un mode de réalisation d'une installation de nettoyage à l'aide d'une solvant avec recyclage du solvant souillé,

— la figure 2 correspond à un autre mode de réalisation de l'installation de nettoyage représentée sur la figure 1,

— la figure 3 est un schéma d'une partie d'une installation pour la récupération de liquides nettoyage ou de solvants,

— la figure 4 est une vue en perspective d'un cavalier de fixation d'une garniture sur le bord de la cuve.

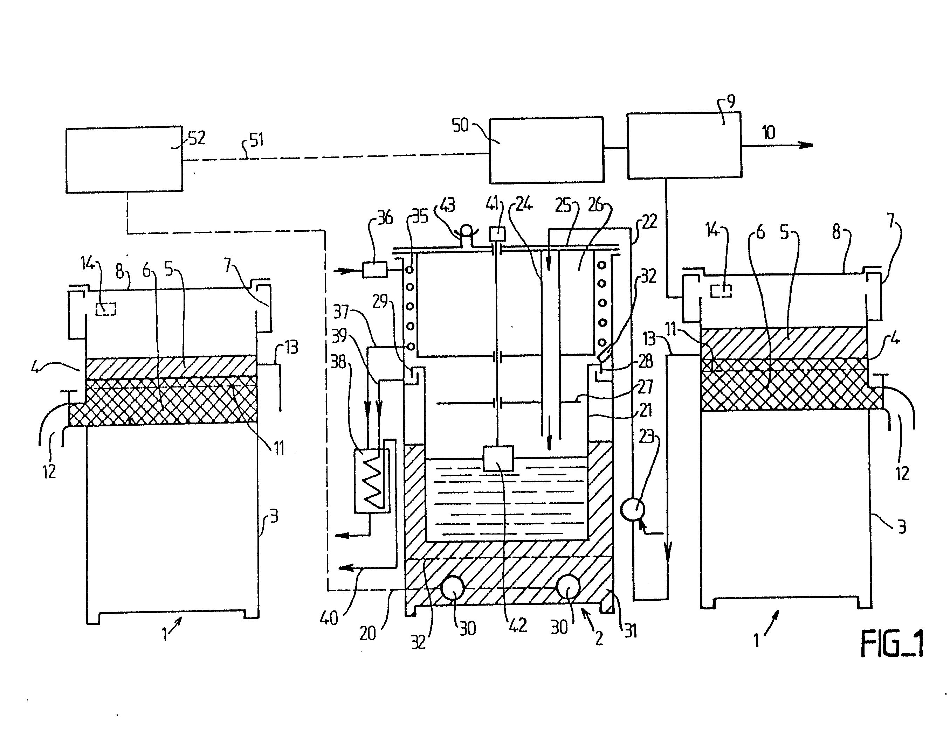

Selon la figure 1, l'installation se compose de dispositifs de nettoyage 1 contenant, du solvant et d'un dispositif de recyclage 2 destiné à traiter le solvant souillé pour récupérer du solvant propre.

Le dispositif de nettoyage 1 se compose d'une bâti 3 formant un bac de nettoyage 4 chargé de solvant 5 et de liquide de décantation tel que de l'eau 6. Dans la partie supérieure, le bâti 3 est muni d'un collecteur périphérique 7 d'aspiration des vapeurs lorsque le couvercle 8 est enlevé. L'aspirateur 9 refoule l'air chargé de gaz et de vapeur de solvant par la conduite 10.

La détection de l'ouverture du couvercle est assurée par un détecteur 14.

Le bac 4 est subdivisé horizontalement en deux parties par une grille 11 destinée à supporter les objets à nettoyer, plongés au moins partiellement dans la nappe de solvant 5 tout en évitant de mettre les articles nettoyés en contact avec les boues qui s'accumulent au fond du bac 4. Pour éviter d'avoir à introduire dans le bac 4, une quantité trop importante de solvant, on prévoit de remplir le fond du bac 4 d'un liquide de décantation tel que de l'eau 6 sur une hauteur correspondant sensiblement à la grille 11 et on recouvre ce liquide d'une couche de solvant 5.

On peut également prévoir tout autre liquide de décantation soit parce que moins coûteux que le solvant soit parce qu'il favorise la décantation, à condition que ce liquide soit d'une densité supérieure à celle du solvant et qu'il ne soit pas miscible au solvant.

Dans le cas de l'eau, on peut également prévoir des additifs. Pendant et après le nettoyage des objets, outils, etc, ce bac 4 permet, dans un premier temps, de faire décanter le solvant et de séparer les particules solides non miscibles ou difficilement miscibles qui tombent alors au fond du bac et forment un boue.

La conduite d'extraction de solvant 13 débouche dans le bac 4 sensiblement au-dessus de la hauteur du liquide de décantation, c'est-à-dire au-dessus de la grille 11 de façon à pouvoir extraire le solvant souillé sans entraîner les boues, que l'on extrait de temps à autre par l'intermédiaire d'un robinet 12 de forte section débouchant au fond du bac. Pour favoriser l'évacuation du fond, celui-ci peut être incliné en direction du robinet 12. Comme le bac 4 doit se trouver à une hauteur appropriée au travail, on peut utiliser la partie libre en-dessous du bac pour ranger les outils nettoyés, etc.

Le dispositif de nettoyage 1 comporte un détecteur 14 détectant l'ouverture du couvercle 8 pour commander la mise en route de l'aspirateur 9.

Le dispositif de nettoyage 1 s'utilise soit en laissant séjourner les articles à nettoyer sur la grille 11 à l'intérieur du bac, soit en procédant à leur nettoyage à l'aide d'outils appropriés en les plongeant ou en les mouillant avec du solvant.

Dans ce dernier cas, comme l'opération se fait manuellement, il est important d'éviter que l'utilisateur ne respire les vapeurs de solvant. Pour cela, la partie supérieure du dispositif est mise en dépression par l'aspirateur 9.

L'installation selon l'invention comporte de préférence plusieurs dispositifs 1 fonctionnant en alternance de façon à:
— favoriser la décantation évitant d'introduire inutilement des boues ou suspensions dans le dispositif de recyclage 2,
— permettre d'alimenter de façon quasi continue le dispositif de recyclage 2 pour éviter les à-coups de chauffe ou le refroidissement inutile du dispositif 2 dans l'intervalle de deux phases opératoires si l'installation fonctionnait en dicontinu,
— permettre de profiter et de ne pas perdre la chaleur accumulée dans le liquide caloporteur du dispositif de recyclage 2,
— avoir toujours un dispositif de nettoyage 1 dont le solvant soit relativement propre.

Le dispositif de recyclage 2 se compose d'une enceinte 20 contenant une cuve de distillation 21 dans laquelle on charge le solvant à nettoyer par l'intermédiaire de la conduite 22 relié à la sortie 13 du bac 4 par une pompe 23. De façon avantageuse, la pompe 23 est constituée par un injecteur d'air situé dans la partie basse de la forme en U de la conduite 22 de façon à permettre par injection d'air d'amorcer le siphon et de transférer le solvant souillé dans la cuve de distillation 21.

A l'intérieur de l'enceinte 20, la conduite 24 qui prolonge la conduite 22 traverse le couvercle 25, le sous-couvercle 26 et la plaque anti-projection 27.

La cuve de distillation 21 est de préférence munie d'un bord supérieur recourbé 28 qui sert en même temps à la mise en place de la cuve 21 dans la goulotte périphérique 29 de récupération du condensat et de moyens d'étanchéité.

A l'intérieur du dispositif 2, en un endroit situé au voisinage de la cuve de distillation, il est prévu un détecteur de présence 32 interdisant la mise en route de l'injecteur 23 ou des éléments de chauffage 30 lorsque la cuve 21 n'est pas en place.

Dans la partie inférieure de l'enceinte 20 se trouvent des dispositifs de chauffage 30 de préférence des résistances électriques placées dans des caissons ait-déflagrants noyés dans un bain d'huile 31.

Dans le bain d'huile, il est prévu une grille 32 de protection des dispositifs de chauffage 30 contre les chocs éventuels.

Les dispositifs de chauffage 30 sont contrôlés par une régulation électrique se situant dans l'armoire de commande 50. Pour cela, il est prévu des sondes de température non représentées plongées dans le bain d'huile 31 ou plus généralement dans le liquide caloporteur et dans la cuve de distillation pour régler la température de distillation en fonction du solvant traité.

Dans la partie supérieure de l'enceinte 20 se trouve le dispositif de condensation formé d'un serpentin 35 alimenté en eau et muni d'un détecteur d'eau 36. La conduite de sortie 37 du serpentin 35 débouche dans un dispositif de refroidissement auxiliaire 38 puis est évacuée. Le sous-couvercle 26 délimite avec la paroi supérieure de l'enceinte 20 un espace périphérique de faible épaisseur, autour du serpentin 35 pour constituer la zone de condensation au-dessus de la goulotte de récupération de condensat 29.

Les condensats tombent dans la goulotte 29 pour en être extraits par la conduite 39 qui débouche dans le dispositif derefroidissement auxiliaire 38 d'où ils sont évacués par la conduite 40 qui, de préférence forme un siphon.

Le dispositif 2 comporte divers moyens de sécurité par exemple un détecteur de niveau 41 muni d'un flotteur 42 détectant le niveau de solvant et qui arrête le chauffage par les résistances 30 dès que ce niveau atteint un minimum. Ce détecteur commande également le transfert de solvant souillé dès qu'un certain niveau de préférence supérieur au niveau minimum est atteint, de façon à régulariser la chauffe.

Il est également prévu un étant 43 qui évite la mise en pression de l'intérieur de l'enceinte 20.

Les diverses fonctions sont commandées à partir d'un pupître de commande 50 qui est relié par une ligne 51 à l'armoire électrique de puissance 52 située à une distance appropriée de l'ensemble de l'installation pour travailler en sécurité. Le pupître de commande 50 ainsi que les dispositifs électriques dont la présence, indispensables au niveau du dispositif de nettoyage 1 ou du dispositif de recyclage 2, fonctionnent en sécurité dans les conditions anti-déflagrantes.

La description ci-dessus n'a été faite que pour le dispositif 1, représenté à droite sur la figure 1, puisque l'on a supposé que le dispositif de gauche était utilisé pour le nettoyage. En fait, bien que cela ne soit pas représentée, les dispositifs 1 sont tous reliés aux dispositifs 2, 9, 50, la commande assurant le transfert en continu ou de façon discontinue du solvant souillé vers la cuve de distillation sans qu'à chaque fois, il soit nécessaire de faire le branchement des conduites.

Enfin, l'ensemble du dispositif 2 est avantageusement entouré d'une enceinte d'isolation munis d'un couvercle également isolant et comportant un moyen de balayage par l'air pour éviter l'accumulation de mélanges gazeux explosifs.

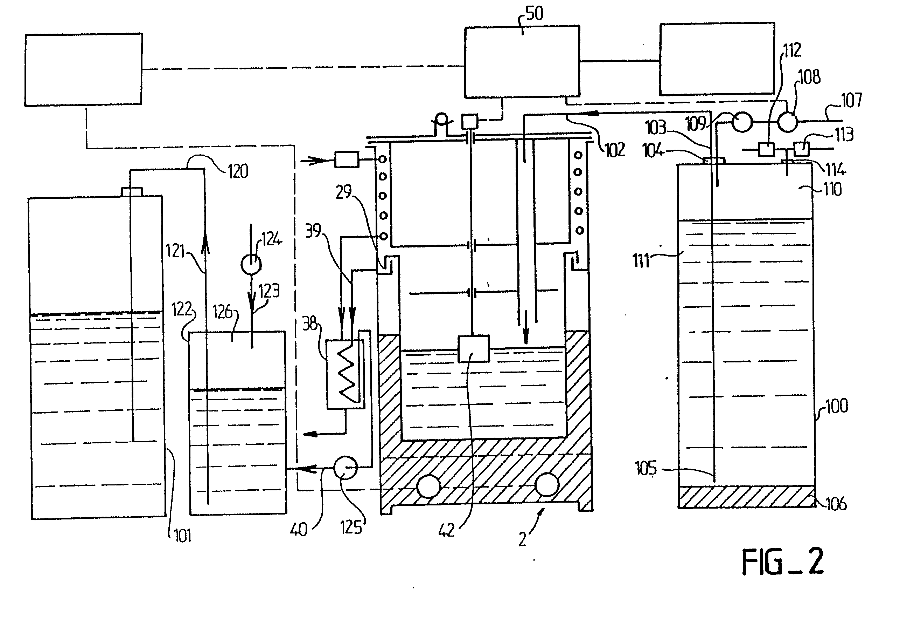

Selon la figure 2, l'installation comporte un moyen d'alimentation de liquide souillé ou à recycler contenu dans un récipient 100, tel qu'un fût de 200 litres. Le liquide à recycler contenu dans ce récipient 1 doit être transféré dans le dispositif de recyclage 2. Ce transfert est assuré de façon discontinue, la commande se faisant à partir du détecteur de niveau 41 lui-même commandé par le flotteur 42.

A la sortie du dispositif de recyclage 2, il est prévu un récipient 101 tel qu'un fût analogue au récipient 100 et qui récoit le produit recyclé.

De façon plus détaillée, le moyen d'alimentation se compose d'un tuyau 102 relié à la conduite 24 débouchant dans la cuve du dispositif 2. Ce tuyau 102 se termine par une canne 103 qui vient plonger dans le fût 100 à travers un bouchon hermétique 104. La longueur de la canne 103 est choisie en fonction des produits à traiter et la longueur d'introduction de la canne 103 dans le récipient 100 est telle que l'extrémité 105 de la canne se trouve à une certaine distance au-dessus du fond du récipient 100, car sur ce fond, il y a une couche 106 de dépôt de particules initialement en suspension et qui ne contient plus que très peu de liquide à recycler.

Le moyen d'alimentation comporte également une conduite d'air 107 munie d'une vanne 108 commandée à partir du poste de commande dont fait partie le pupître de commande 50 ainsi que d'une soupape de sécurité 109 tarée à une pression relativement faible, par exemple quelques centaines de millibars. La conduite 107 débouche dans la partie supérieure du récipient 100 et sert à injecter un gaz comprimé en général de l'air comprimé, pour créer une couche d'air 100 servant à refouler le liquide 111 et le faire remonter par la canne 103 pour l'introduire dans le dispositif de recyclage 2.

Le fonctionnement de l'appareil est cyclique puisque le contenu du récipient 100 correspond en général à plusieurs fois la quantité de liquide souillé que peut traiter le dispositif de recyclage 2.

Le moyen d'alimentation fonctionne comme suit:

Initialement, le flotteur 42 est en position basse puisque l'on suppose que le dispositif de recyclage 2 est vide. Le détecteur de position 41 envoie un signal au poste de commande. Si l'appareil est mis en route, le poste de commande envoie un signal à la vanne commandée 108 qui permet l'introduction d'air comprimé par la conduite 107 dans le réservoir 110. Le liquide 101 est ainsi refoulé à travers la conduite 102 dans le dispositif 2. Ce fonctionnement se poursuit jusqu'à ce que le flotteur 42 se trouve en position haute et commande le détecteur de niveau 41 pour arrêter l'alimentation. Le circuit commande alors la fermeture de la vanne 108 qui coupe l'envoi d'air comprimé dans le récipient 100, si bien que le liquide ne peut plus remonter à travers la canne 103 et passer dans la conduite 102.

Pour éviter que le liquide contenu dans le coude du siphon formé par la canne 103, le tuyau 102 et la conduite 24 ne s'amorce en sens inverse et ne refoule le liquide du dispositif de recyclage 2 (dans la mesure où l'extrémité inférieure de la conduite 24 plonge dans ce liquide) en retour dans le récipient 100, il est prévu une soupape d'échappement 112 branchée en même temps que la vanne de sécurité 113 sur un bouchon 114. La soupape d'échappement 112 est une soupape qui est fermée aussi longtemps que l'une de ses entrées est soumise à une certaine pression. Cette soupape s'ouvre dès que cette pression disparaît. Dans le cas présent, l'entrée soumise à la pression est reliée au récipient 100, dans la partie supérieure de celui-ci. Dès que cette pression diminue ou atteint le seuil de déclenchement, c'est-à-dire lorsque la vanne 108 se ferme, la soupape d'échappement 112 s'ouvre et fait communiquer le volume 110 au-dessus du liquide 111 avec l'extérieur. Cette mise à la pression extérieur du volume 110 provoque pratiquement immédiatement l'effondrement de la colonne de liquide contenu dans le siphon 103, 102, 24 en évitant que ne s'amorce un siphon.

La soupape de sécurité 113 est réglée par une pression dite "de sécurité" nettement supérieure à la pression à laquelle est réglée la soupape 109.

Le moyen d'évacuation ci-dessus en sortie du dispositif de recyclage 2, se compose du récipient 101 destiné à recevoir le liquide ou le solvant nettoyé et recyclé. Ce récipient 101 qui peut être de même type que le récipient 100, est relié par une conduite 120 et une canne 121 à une réservoir 122; la canne 121 débouche dans le réservoir tampon 122 et arrive pratiquement au fond de celui-ci. Le réservoir tampon 122 est également muni d'une conduite d'alimentation en air comprimé 123 équipée d'une vanne d'arrêt 124.

Le réservoir tampon 122 reçoit le liquide nettoyé ou condensat par la conduit 40 munie d'une vanne d'arrêt 125. La conduite 40 est la conduite de sortie du dispositif de refroidissement auxiliaire 38 placé en sortie de la goulotte 29.

La hauteur du réservoir tampon 122 ou du moins la hauteur maximale du niveau du condensat dans ce réservoir ne peut dépasser la hauteur de la goulotte 29 si l'on veut transférer le condensat de la goulotte 29 au réservoir 122 par gravité.

Le moyen d'évacuation du liquide recyclé fonctionne comme suit:

Initialement, on suppose le réservoir tampon 122 vide, la vanne 124 fermée et la vanne 125 ouverte. Le condensat peut ainsi passer par gravité de la goulotte 29 à travers le dispositif de refroidissement auxiliaire 38, la vanne 125 et la conduite 40 dans le réservoir tampon 122. Dès que le réservoir tampon 122 contient une certaine quantité de liquide, quantité qui est définie par expérience ou détectée par un flotteur non représenté, la vanne 125 se ferme et la vanne 124 s'ouvre pour permettre l'introduction d'air comprimé dans la partie haute 126 du réservoir tampon 122. Cet air comprimé refoule le liquide à travers la canne 121 et la conduite 120 dans le récipient 101. A la fin de cette évacuation, la vanne 124 se ferme de nouveau coupant l'envoi d'air et la vanne 125 s'ouvre en permettant le passage du condensat dans le réservoir tampon 122. La vanne 124 peut être une vanne de fermeture avec mise à l'air libre automatiquement du volume 126, pour éviter qu'il ne se forme un coussin d'air comprimé dans la réservoir auxiliaire 122 interdisant la remontée du condensat à l'intérieur de ce réservoir 122. Il est également possible de prévoir une soupape d'échappement non représentée, et qui a un rôle et un fonctionnement similaire à ceux de la soupape d'échappement 112 du récipient 100.

Bien que dans le cas général, le condensat passe à travers le dispositif de refroidissement 38, cela n'est pas indispensable pour tous les liquides et il peut exister un branchement direct reliant la goulotte 29 à travers une vanne commandée au réservoir tampon 122.

La commande du fonctionnement du moyen d'alimentation est faite de façon automatique par le flotteur 42.

La commande du moyen d'évacuation peut également se faire à partir d'un flotteur et d'un détecteur de niveau montés sur le réservoir auxiliaire 122. Toutefois, en pratique, il est possible de déterminer avec une bonne marge de sécurité les temps de fonctionnement de l'installation au niveau de l'évacuation. C'est ainsi que dans la pratique, il est facile de connaître la durée moyenne de distillation et de condensation d'une cuve remplie du dispositif de recyclage 2. Suivant la capacité du réservoir tampon 122, il faudra à chaque fois vider ce réservoir tampon 122 une ou plusieurs fois.

S'il faut vider le réservoir tampon 122 plusieurs fois, ce qui est intéressant pour éviter d'avoir un réservoir tampon 122 de dimensions trop encombrantes cela ne pose pas de difficulté particulière puisque l'évacuation du liquide du réservoir tampon 122 dans la récipient 101 se fait de façon très rapide, évitant dans tous les cas que le condensat qui s'accumule en amont de la vanne 125 ne déborde de nouveau de la goulotte 29.

La description ci-dessus envisage des vannes 108, 124 qui, de façon générale, peuvent être remplacées par des vannes commandées par des pressostats, c'est-à-dire des vannes intégrées à l'appareil et dont l'ouverture ou la fermeture sont commandées lorsqu'on atteint un seuil de pression réglable.

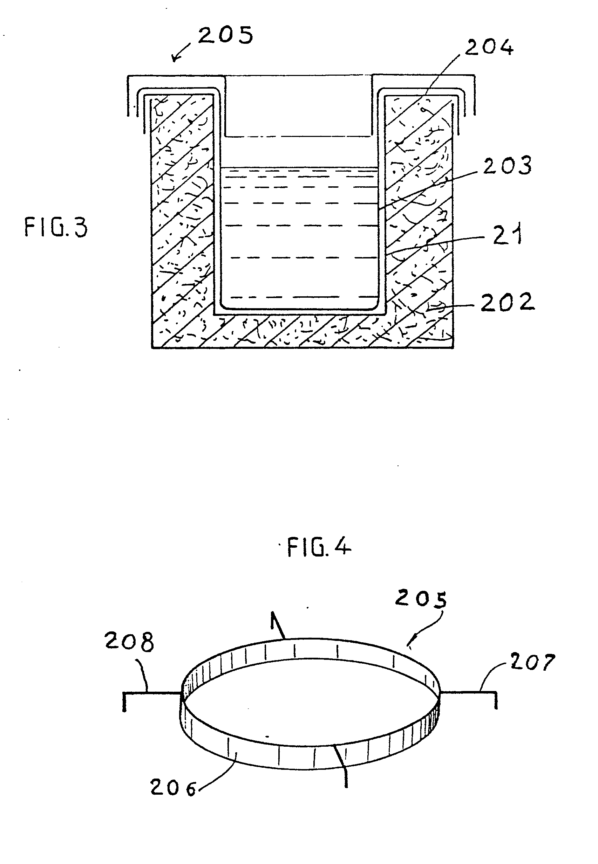

Selon la figure 3, on munit l'intérieur de la cuve 21 d'une garniture 203 qui est fixée au bord 204 de la cuve à l'aide d'un moyen defixation 205 tel que celui représenté à la figure 4.

Cette garniture 203 peut être un récipient auxiliaire jetable; toutefois, cette garniture 203 est de préférence une poche qui a l'avantage de bien d'appliquer contre la face intérieure de la cuve 21 sous l'effet de la pression exercée par le liquide à traiter. Cette garniture est réalisée en un matériau chimiquement inerte via-à-vis des liquides à traiter et qui résiste à la température d'ébullition du liquide à récupérer. En effet, pour distiller le liquide à nettoyer et en évaporer le liquide à récupérer, il faut chauffer le liquide à la température d'ébullition du liquide à nettoyer.

En général, on utilisera une poche en matière synthétique appropriée.

La cuve 21 sert de support non seulement au bord supérieure de la poche mais à toute la surface utile de la poche c'est-à-dire la surface en contact avec le liquide.

Même en cas d'incident, si la poche devait pour une raison quelconque se déchirer, le liquide reste dans la cuve 21, ce qui constitue une sécurité.

Le moyen de fixation 205 du bord de la poche sur la cuve 21 et, en particulier, sur son bord 204 est constitué selon un exemple de réalisation particulier par un moyen de fixation 205 en forme d'anneau 207 muni de pattes radiales 208 en forme de U renversé, venant coiffer la bord supérieur 204 de la cuve. La forme de ces pattes 208 est choisie en fonction de la forme du bord 204. Dans l'exemple représenté aux figures 3 et 4, la cuve 21 étant munie d'un bord plat 204, les pattes 208 ont une forme de L renversé délimitant avec l'anneau 207 une section en forme de U, carré, renversé.

Si le bord 204 n'existe pas, on diminue l'extension radiale des branches des pattes 208 de façon correspondante.

Ce moyen de fixation 205 offre l'avantage d'être particulièrement simple et efficace puisque l'anneau 207, intérieur, plaque la poche 203 contre la face intérieure verticale de la cuve 21 tout en constituant l'élément pesant du moyen de fixation, dont le poids est appliqué par l'intermédiaire des pattes 206 sur le bord de la poche 203.

D'autres moyens de fixation du bord de la poche peuvent s'envisager. On peut notamment, dans certains cas, si la disposition géométrique et la structure de l'installation le permettent, inverser la position des crochets et les diriger vers l'intérieur de la cuve, l'anneau 207 étant alors extérieur.

Lorsqu'un certain nombre de cycles de distillation ont été effectués, et que les couches de boues sur les parois et sur le fond de la poche 203 sont jugées suffisantes, on remplace cette poche, ou plus généralement cette garniture 203 par une garniture propre. La garniture 203 chargée de ces boues constitue l'enveloppe pour le transport. Cela permet un transport particulièrement propre des boues sans risque de souillures d'un autre récipient.

## Revendications

1. Installation de nettoyage à l'aide d'un solvant avec recyclage du solvant souillé, installation comportant des dispositifs de nettoyage contenant du solvant et munis d'un bac de nettoyage et de décantation, et des moyens de transfert du liquide souillé vers un dispositif de recyclage par distillation et condensation du solvant et formation de boues, installation caractérisée en ce que le dispositif de recyclage par distillation et condensation (2) comporte une cuve de distillation (21) amovible et des moyens de chauffage (30, 31) du liquide souillé par immersion de la cuve contenant le liquide souillé dans un milieu fluide et en ce qu'une zone de condensation périphérique est délimitée à l'intérieur du bac par une pièce amovible (26) formant couvercle.

2. Installation selon la revendication 1, caractérisée en ce que la zone de condensation est délimitée à sa base par une goulotte périphérique (29) fixée à la paroi intérieure du dispositif de recyclage (2), cette goulotte servant en même temps de support à la cuve de distillation (21).

3. Installation selon la revendication1, caractérisée en ce qu'elle comporte un dispositif de refroidissement (38) relié à la sortie de la zone de condensation et recevant le fluide réfrigérant utilisé pour la condensation.

4. Installation selon la revendication 1, caractérisée en ce qu'elle comporte une plaque (27) venant se placer dans la cuve de distillation (21) pour éviter les projections de liquide souillé vers la zone de condensation (29, 35).

5. Installation selon la revendication 1, caractérisée en ce que le moyen de transfert du liquide souillé vers la cuve de distillation (21) comporte un tube (24) solidaire de la pièce amovible (26), ce tube débouchant dans la cuve de distillation (21) au voisinage de la hauteur maximale de remplissage par le liquide souillé.

6. Installation selon la revendication 1, caractérisé en ce que le moyen de transfert du liquide souillé se compose d'une canalisation (13, 22) en forme de U, reliant la zone prévue pour le liquide souillé du bac de nettoyage et de décantation (4) et la partie supérieure du dispositif de recyclage (2) pour venir dans le tube (24), un moyen d'injection d'air (23) pour la propulsion du liquide souillé étant prévu dans la colonne montante (22) du tube en U.

7. Installation selon la revendication 1, caractérisée en ce que le dispositif de nettoyage comporte un collecteur (7) situé au niveau du bord de l'ouverture supérieure du bac de nettoyage et de décantation (4), ce collecteur étant relié à une source de dépression pour aspirer les vapeurs de solvant dès l'ouverture du couvercle (8) de ce bac.

8. Installation selon l'une quelconque des revendications 1 à 7, caractérisée en ce qu'elle comporte des moyens de sécurité et de protection comprenant un détecteur (41, 42) de présence de liquid souillé dans la cuve de distillation (21), un détecteur de présence de la cuve de distillation (21), un détecteur d'eau (36) dans le circuit de condensation (35) et le circuit de refroidissement (38).

9. Installation conforme aux revendications de 1 à 3, caractérisée en ce qu'elle comporte un moyen d'alimentation du dispositif de recyclage (2) à partir d'un récipient susceptible d'être fermé hermétiquement et qui contient un liquide à recycler, ce moyen d'alimentation étant composé d'une conduite (107, 108, 109) d'injection de gaz comprimé dans le récipient (100) et d'une conduite d'évacuation (102) débouchant par une canne (103) au niveau du fond du récipient pour permettre le refoulement du liquide à recycler dans le dispositif de recyclage (2), le début et la fin de l'opération d'alimentation étant commandés par un flotteur et un détecteur de niveau (42, 41) associés au dispositif de recyclage (2).

10. Installation selon la revendication 9, caractérisée en ce qu'elle comporte un moyen (112) du mise à l'atmosphère extérieure du volume intérieur (110) du récipient (100) pour provoquer l'effondrement de la colonne de liquide dans la conduite (102) et dans la canne (103) et éviter qu'il ne s'établisse un siphon et en ce que le récipient (100) est muni d'une soupape de sécurité (113).

11. Installation selon la revendication 9, caractérisée en ce qu'elle comporte également un moyen de récupération formé d'un récipient (101) relié à la goulotte périphérique (29) du dispositif de recyclage (2) par l'intermédiaire d'un réservoir tampon (122), ce dernier étant lui-même relié a la goulotte (29) par une conduite (40) munie d'une vanne d'arrêt (125), ainsi qu'à une source d'air comprimé par l'intermédiaire d'une conduite (123) et d'une vanne d'arrêt (124), la fermeture alternée des vanes (100, 124, 125) permettant respectivement l'écoulement du condensat de la goulotte (29) dans ce récipient (122), puis l'évacuation du liquide ainsi accumulé dans le réservoir tampon (122) vers le récipient (120) par envoi d'air comprimé.

12. Procédé de récuperation d'un liquide de nettoyage contenant des boues à l'aide d'une installation selon l'une quelconque des revendications 1 à 11, procédé consistant à mettre la totalité ou une fraction du liquide à traiter dans une cuve de distillation, à chauffer pour distiller le liquide à traiter et à condenser le liquide propre ou régénéré, les boues restant dans la cuve de distillation, procédé caractérisé en ce qu'on munit la cuve de distillation (21) d'une garniture intérieure (203) amovible et jetable épousant la forme intérieure de la cuve de distillation (21) pour recevoir le liquide à traiter, cette garniture (203) étant en un matériau chimiquement inerte par rapport aux composants du liquide à traiter et résistant au moins à une température égale à la température d'ébullition du liquide à récupérer.

13. Procédé selon la revendication 12, caractérisé en ce que la garniture est un récipient rigide ou une poche fixée de façon amovible sur le bord (204) de la cuve de distillation (21) à l'aide d'un moyen de fixation (205).

**Patentansprüche**

1. Einrichtung zur Reinigung mit Hilfe eines Lösungsmittels unter Wiederverwendung des verunreinigten Lösungsmittels, wobei die Einrichtung mit Reinigungsvorrichtungen, die Lösungsmittel enthalten und einen Reinigungs- und Absetzbehälter aufweisen, und Mitteln zur Beförderung der verunreinigten Flüssigkeit zur Vorrichtung zur Rückgewinnung durch Destillation und Kondensation des Lösungsmittels und Bildung von Ablagerungen versehen ist, dadurch gekennzeichnet, daß die Vorrichtung zur Rückgewinnung durch Destillation und Kondensation (2) einen abnehmbaren Destillationsbehälter (21) und Vorrichtungen (30, 31) zum Aufheizen der verunreinigten Flüssigkeit durch Eintauchen des die verunreinigte Flüssigkeit enthaltenden Behälters in flüssiges Medium umfaßt und daß eine umgebender Kondensationsbereich im Inneren des Behälters durch ein einen Deckel bildendes abnehmbares Teil (26) begrenzt wird.  ·

2. Einrichtung gemäß Anspruch 1, dadurch gekennzeichnet, daß der Kondensationsbereich in seinem unteren Bereich durch einen umgebenden Ablauf (29) begrenzt ist, der an der Innenwand der Rückgewinnungsvorrichtung (2) befestigt ist, wobei dieser Ablauf gleichzeitig als Träger für den Destillationsbehälter (21) dient.

3. Einrichtung gemäß Anspruch 1, dadurch gekennzeichnet, daß sie eine Kühlvorrichtung (38) aufweist, die mit dem Ausgang des Kondensationsbereichs verbunden ist und die zur Kondensation verwendete Kühlflüssigkeit aufnimmt.

4. Einrichtung gemäß Anspruch 1, dadurch gekennzeichnet, daß sie eine Platte (27) aufweist, die sich in dem Destillationsbehälter (21) befindet, um zu verhindern, daß Spritzer der verunreinigten Flüssigkeit in den Kondensationsbereich (29, 35) gelangen.

5. Einrichtung gemäß Anspruch 1, dadurch gekennzeichnet, daß das Mittel zum Transport der verunreinigten Flüssigkeit in den Destillationsbehälter (21) ein mit dem abnehmbaren Teil (26) verbundenes Rohr (24) aufweist, wobei dieses Rohr in den Destillationsbehälter (21) bis zur maximalen Füllhöhe der verunreinigten Flüssigkeit reicht.

6. Einrichtung gemäß Anspruch 1, dadurch gekennzeichnet, daß das Mittel zur Beförderung der verunreinigten Flüssigkeit aus einem u-förmigen Kanalsystem (13, 22) besteht, das den für die verunreinigte Flüssigkeit vorgesehenen Bereich des Reinigungs- und Absetzbehälters (4) und den oberhalb gelegenen Teil der Rückgewinnungsvorrichtung (2) verbindet, um in das Rohr (24) zu gelangen, wobei eine Luftzuführungsvorrichtung (23) zur Fortbewegung der verunreinigten Flüssigkeit in der aufsteigenden Säule (22) des U-Rohrs vorgesehen ist.

7. Einrichtung gemäß Anspruch 1, dadurch gekennzeichnet, daß die Reinigungsvorrichtung einen Sammler (7) umfaßt, der sich in Höhe des Randes der oberen Öffnung des Reinigungs- und Absetzbehälters (4) befindet, wobei dieser Sammler mit einer Unterdruckquelle verbunden ist, um die Lösungsmitteldämpfe im Augenblick der Öffnung des Deckels (5) dieses Behälters abzusaugen.

8. Einrichtung gemäß der Ansprüche 1 bis 7, dadurch gekennzeichnet, daß sie Sicherheitsvorrichtungen und Schutzvorrichtungen umfaßt, die aus einem Flüssigkeitsstandfühler (41, 42) zur Messung des Standes der verunreinigten Flüssigkeit im Destillationsbehälter (21);· einem Standfühler des Destillationsbehälters (21) und einem Fühler (36) für das im Kondensationskreislauf (35) und im Kühlkreislauf (38) befindliche Wasser besteht.

9. Vorrichtung entsprechend den Ansprüchen 1 bis 3, dadurch gekennzeichnet, daß sie eine Zuführungseinrichtung für die Rückgewinnungsvorrichtung (2) aufweist, die von einem hermetisch verschließbaren Behälter ausgeht und eine wiederzuverwendende Flüssigkeit enthält, wobei diese Zuführungseinrichtung aus einer Leitung (107, 108, 109) zur Zuführung von Druckgas in den Behälter (100) und aus einer Entleerungsleitung (102) besteht, die über ein Rohr (103) bis zum Boden des Behälters reicht, um die Förderung der wiederzuverwendenden Flüssigkeit in den Rückgewinungsbehälter (2) zu ermöglichen, wobei Beginn und Ende des Zuführungsvorgangs über einen mit der Rückgewindungsvorrichtung (2) zusammenhängenden Schwimmer und einen Flüssigkeitsstandmesser (42, 41) gesteuert wird.

10. Vorrichtung gemäß Anspruch 9, dadurch gekennzeichnet, daß sie eine Vorrichtung (112) aufweist, mit der der Innenraum (110) des Behälters der Außenatmosphäre ausgesetzt wird, um einen Abfall der Flüssigkeitssäule in der Leitung (102) und in dem Rohr (103) zu erreichen und zu vermeiden, daß sich ein Siphon bildet und daß der Behälter (100) mit einem Sicherheitsventil (113) ausgerüstet ist.

11. Vorrichtung gemäß Anspruch 9, dadurch gekennzeichnet, daß sie auch ein Mittel zur Rückgewinnung aufweist, das aus einem Behälter (101) besteht, der mit dem umgebenden Ablauf (29) des Rückgewinnungsbehälters (2) über einen Pufferbehälter (122) verbunden ist, der selbst über eine Leitung (40) mit dem Ablauf (29), die mit einem Absperrventil (125) ausgerüstet ist, sowie mit einer Druckluftquelle über eine Leitung (123) und ein Absperrventil (124) verbunden ist, wobei der wechselnde Verschluß der Ventile (100, 124, 125) jeweils den Abfluß des Kondensats des Ablaufs (29) in diesen Behälter (122) und anschließend den Ablauf der so in dem Pufferbehälter (122) angesammelten Flüssigkeit in den Behälter (120) durch Einlassen von Druckluft ermöglicht.

12. Verfahren zur Rückgewinnung einer Ablagerungen enthaltenden Reinigungsflüssigkeit mit Hilfe einer Vorrichtung gemäß einem der Ansprüche 1 bis 11, das darin besteht, die zu behandelnde Flüssigkeit ganz oder teilweise in einen Destillationsbehälter zu geben, die zu behandelnde Flüssigkeit zur Destillation aufzuheizen und die saubere oder wiedergewonnene Flüssigkeit zu kondensieren, wobei die Ablagerungen im Destillationsbehälter zurückbleiben, ein Verfahren, das dadurch gekennzeichnet ist, daß der Destillationsbehälter (21) mit einem abnehmbaren und einmal verwendbaren Inneneinsatz (203) ausgelegt wird, der sich an das Innere des Destillationsbehälters (21) anpaßt, um die zu behandelnde Flüssigkeit aufzunehmen, wobei diese Vorrichtung (203) aus einem sich chemisch gegenüber Bestandteilen der zu behandelnden Flüssigkeit inert verhaltenden Material besteht und sich mindestens gegenüber der Siedetemperatur der wiederzugewinnenden Flüssigkeit widerstandfähig verhält.

13. Verfahren gemäß Anspruch 12, dadurch gekennzeichnet, daß die Garnitur aus einem festen Behälter oder aus einer mit Hilfe einer Befestigungsvorrichtung (205) abnehmbar an Rand (204) des Destillationsbehälters (21) befestigten Tasche besteht.

**Claims**

1. Installation for cleaning by means of a solvent with facility for recycling the dirty solvent, the said installation comprising cleaning means containing solvent and provided with a cleaning and decanting tank, and means of transferring dirty liquid to a device for recyling by distillation and condensation of the solvent and formation of sludge, the said installation being characterised in that the device for recycling by distillation and condensation (2) comprises a removable distillation tank (21) and means (30, 31) for heating the dirty liquid by immersion of the tank containing the dirty liquid into a fluid medium and in that a peripheral condensation zone is defined inside the tank by a removable member (26) which forms a lid.

2. Installation according to Claim 1, characterised in that the condensation zone is defined at its base by a peripheral spout (29) fixed to the inside wall of the recycling apparatus (2), the said spout serving at the same time as a support for the distillation tank (21).

3. Installation according to Claim 1, characterised in that it comprises a cooling device (38) connected to the outlet from the condensation zone and receiving the refrigerant fluid used for condensation.

4. Installation according to Claim 1, characterised in that it comprises a plate (27) which is placed in the distillation tank (21) to avoid dirty liquid being splashed towards the condensation zone (29, 35).

5. Installation according to Claim 1, characterised in that the means of transferring dirty liquid to the distillation tank (21) comprises a tube (24) rigid with the removable member (26), the said tube discharging into the distillation tank (21) in the vicinity of the maximum height of filling by dirty liquid.

6. Installation according to Claim 1, characterised in that the means of transferring dirty liquid consists of a U-shaped duct (13, 22) connecting the zone provided for the dirty liquid in the cleaning and decanting tank (4) and the top part of the recycling apparatus (2) so that it can enter the tube (24), a means of injecting air (23) for propulsion of dirty liquid being provided in the rising column (22) of the U-shaped tube.

7. Installation according to Claim 1, characterised in that the cleaning device comprises a collector (7) situated at the level of the edge of the top opening of the cleaning and decanting tank (4), the said collector being connected to a source of negative pressure in order to draw the solvent vapours away from the opening in the lid (8) of this tank.

8. Installation according to any one of Claims 1 to 7, characterised in that it comprises security and protective means comprising a detector (41, 42) of the presence of dirty liquid in the distillation tank (21), a detector establishing anything present in the distillation tank (21), a device (36) for detecting water in the condensation circuit (35) and the cooling circuit (38).

9. Installation according to Claim 1 to 3, characterised in that it comprises a means of supplying the recycling device (2) from a receptacle adapted to be hermetically closed and which contains a liquid to be recycled, this supply means consisting of a pipe (107, 108, 109) for the injection of compressed gas into the receptacle (100) and an evacuation duct (102) discharging through a rod (103) at the level of the bottom of the receptacle to allow feedback of the liquid to be recycled into the recycling apparatus (2), the commencement and finish of the supply operation being controlled by a float and a level detector (42, 41) associated with the recycling apparatus (2).

10. Installation according to Claim 9, characterised in that it comprises a means (112) of connecting the space (110) inside the receptacle (100) with the outside atmosphere in order to bring about a collapse of the column of liquid in the duct (102) and in the rod (103) and avoid any siphon effect becoming established and in that the receptacle (100) is provided with a safety valve (113).

11. Installation according to Claim 9, characterised in that it likewise comprises a recovery means consisting of a receptacle (101) connected to the peripheral channel (29) of the recycling device (2) through a buffer reservoir (122), this latter being itself connected to the channel (29) via a duct (40) connected to a check valve (125), and to a source of compressed air through a pipe (123) and a check valve (124), the alternate closure of the valves (100, 124, 125) making it possible respectively for condensate to flow from the channel (29) into this receptacle (122) and then for the liquid thus accumulated in the buffer reservoir (122) to be evacuated to the receptacle (12) by the effect of compressed air.

12. Method of recovering a cleaning liquid containing sludge by means of an installation according to any one of Claims 1 to 11, the method residing in placing all or a fraction of the liquid to be processed in a distillation tank, in heating the liquid to be treated in order to distil it and in condensing the clean or regenerated liquid, the sludge remaining in the distillation tank, the method being characterised in that the distillation tank (21) is provided with a removable and disposable inner lining (203) matching the inner shape of the distillation tank (21) and adapted to receive the liquid to be treated, this lining (203) being of a chemically inert material when exposed to the constituents of the liquid to be treated and capable of resisting at least a temperature equal to the boiling temperature of the liquid to be recovered.

13. Method according to Claim 12, characterised in that the lining is a rigid receptacle or a pocket fixed in detachable fashion on the edge (204) of the distillation tank (21) by means of a fixing arrangement (205).

FIG_1

0 069 663

FIG_2

FIG.3

205

204

203

21

202

FIG.4

205

208

207

206